# EUROPEAN PATENT SPECIFICATION

(11) **EP 1 128 078 B1**
(45) Date of publication and mention of the grant of the patent: **08.03.2006**
(21) Application number: 00126814.3
(22) Date of filing: 06.12.2000
(51) Int. Cl.: F16C 33/78

(54) **Sealing device for a rolling contact bearing**
Dichtungseinrichtung für ein Wälzlager
Dispositif d'étanchéité pour un palier à contact de roulement

(30) Priority: 22.02.2000 IT TO000159
(43) Date of publication of application: 29.08.2001
(73) Proprietor: SKF INDUSTRIE S.p.A., 10121 Torino (IT)
(72) Inventor: Vignotto, Angelo, 10134 Torino (IT); Marivo, Massimo, 10060 Airasca, (Torino) (IT)
(74) Representative: Lotti, Giorgio

(56) References cited:
- EP-A- 0 464 379
- DE-A- 19 605 179
- FR-A- 2 688 567

## Description

The present invention relates to a sealing device for a rolling contact bearing according to the preamble of claim 1.

Such a sealing device is known from FR 2 688 567 A.

The present invention is advantageous for application in the field of rolling contact bearings for rolling contact bearing hub groups to be used in vehicle wheels, the description which follows hereinafter will make specific reference to this area.

Well-known types of rolling contact bearing hub groups, such as, for example, the one illustrated in the diagram entitled "Prior Art", present a longitudinal A axis and, usually, comprise a central revolving hub 2 defining a radially internal rolling track 3 for a series 4 of axially external spheres; an annular element 5 which is trigged onto the hub 2 and which defines another rolling track 6 which is radially internal for a series 7 of axially internal spheres; and a radially external fixed ring 8, which is coaxial to the hub 2, and which defines the external rolling track 9 for the two series 4 and 7 of spheres.

The hub 2 also comprises, on the opposite side to that which supports the annular element 5, a flange 10 which is jointed to the track 3 via a conical surface 11 with a generating curve, while the ring 8 comprises, on the part turned towards the outside of the rolling contact bearing hub group, a cylindrical end portion 12 which directly faces the surface 11, with which it defines an annular opening 13.

The rolling contact bearing hub group which has just been described also comprises a sealing device 14, which is mounted onto a sealing portion 12 to close the opening 13 in order to render the internal parts of the group itself hermetic, these parts are actually those which house the two series 4 and 7 of spheres and they comprise: a metal insert 15 which is directly coupled to the portion 12, and a vulcanised rubber body 16 on a free portion 17 of the insert 15 itself.

The body 16 comprises five lips L2 - L6, of which the lips L2 and L3 axially extend from the portion 17 towards the portion 12 and, respectively, towards the surface 11, the lips L4 and L5 axially extend towards the outside of the portion 17 and are parallel to each other, and they are arranged in sliding contact with the surface 11, while the lip L6 is radially arranged outside the lips L4 and L5, and it axially extends towards the outside of the insert 15, and it is substantially spaced from the surface 11 in such a way as to counteract the action of the solid impurities which co-operate with the other lips in the sealing action of the device 14.

The sealing device which has just been described, although it has been demonstrated to be quite suitable for performing its function and also quite efficient in that performance, does present some drawback which are essentially determined by the number of lips. In fact, from a purely technical point of view, the presence of these lips can lead to some difficulties during assembly, while, from an economic point of view, it is obvious that the manufacturing costs regarding such a sealing device can be relatively high.

The aim of the present invention is to produce a sealing device for a rolling contact bearing, with a high level of sealing capacity, and which is easy and cost-effective to manufacture.

According to the present invention, a sealing device for a rolling contact bearing according to claim 1 will be produced.

The present invention will now be described with reference to the attached drawing, which illustrates a non-limiting embodiment of the present invention itself and in which:

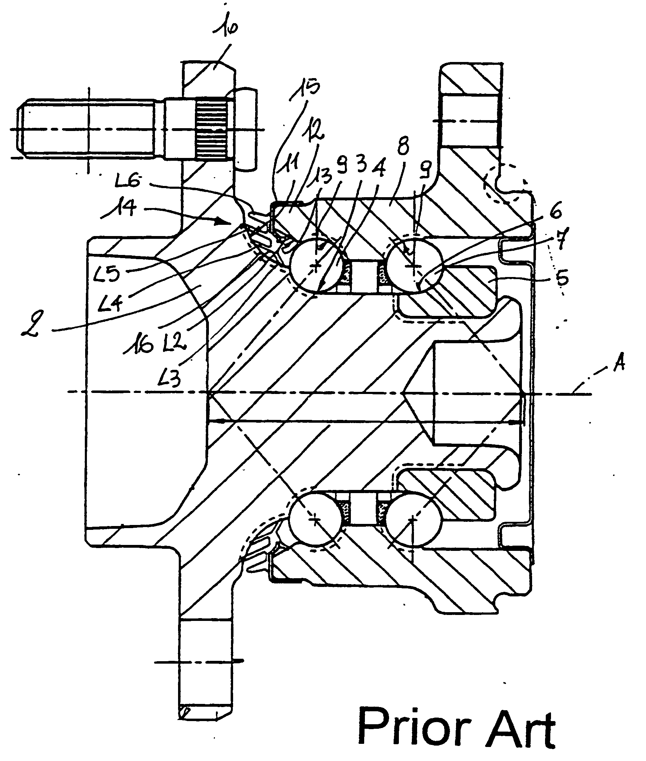

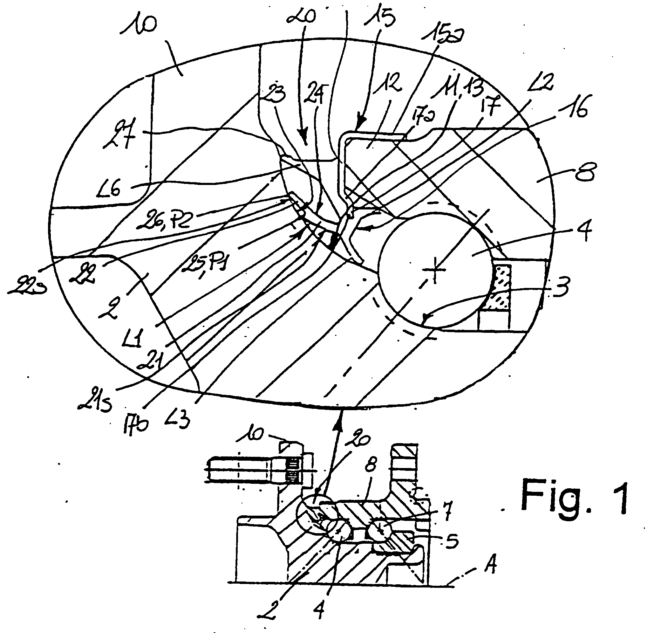

FIGURE 1 shows an axial section, with some parts removed for reasons of clarity, of a first preferred embodiment of the sealing device according to the present invention; and

Making reference to FIGURE 1, and using the same reference numbers to indicate the same or similar parts which have already been described in the initial part of the description, the number 20 indicates, in its entirety, a sealing device which is suitable for being mounted on a sealing portion 12 to close the opening 13 in order to hermetically seal the pace between the hub 2 and the ring 8.

The sealing device 20 defines a considerable improvement with regard to the sealing device 14 which has been previously been described as it solves the problems of the drawbacks already discussed in the introduction, and it is different from the device 14 itself firstly because the lips L4 and L5 are replaced by a single lip L1, which axially extends towards the outside starting from the portion 17, and which is arranged in sliding contact with the surface 11, and secondly because the lip L5 is arranged in a position which is much nearer to the surface 11.

In particular, in the embodiment shown in FIGURE 1, the metal insert 15 is applied onto the portion 12, and it comprises a cylindrical portion 15a which is arranged around the portion 12 itself as well as an annular portion 15b, which is frontally arranged to the portion 12, and which defines with the cylindrical portion 15a and in a transverse section of the insert 15 a substantially L-shaped form for the insert 15 itself. The free portion 17 of the insert 15 extends radially and axially towards the outside starting from the portion 15b and projects with regard to the portion 12, and it comprises a conical portion 17a which is directly connected to the portion 15b, and an annular portion 17b which extends starting from the conical portion 17a in order to define both a support for the body 16 and a starting point for the lip L6.

As has previously been described, the device 10 presents a single lip L1, which is a double contact lip and which has two points of contacts P1 and P2 with the contact surface 11, and which comprises two substantially conical portions 21 and 22 which are arranged in series in relation to each other, and of which the portion 21 presents a thickness S1 which is greater than a thickness S2 of the portion 22, and which defines a chamber 23 between the two points P1 and P2 which are suitable for functioning as a depression valve for hermetically sealing the rolling contact bearing during the cooling of the rolling contact bearing hub group.

Hereinafter, the term "point of contact" will indicate, for reasons of simplifying the description, two single points of contact between the lip L1 and the surface 11, as illustrated if FIGURE 1, but in reality the points P1 and P2 are defined by respective contact circumferences which extend around the A axis on the surface 11.

The portions 21 and 22 are both radially limited towards the outside by a single and continuous surface 24, while, due to their different thickness, they are radially limited towards the inside by two respective surfaces 21s and 22s, of which the surface 21s ends in correspondence with an annular edge 25 defining the point of contact- P1, while the surface 22s ends in correspondence with a respective annular edge 26 defining the point of contact P2. Both the edge 25 and the edge 26 present a substantially rectangular shape in transverse section.

The conical surface 11 with a curved generating line is arranged with its own smaller base turned towards the inside of the rolling contact bearing hub group and with a larger base turned towards the outside of the group itself, so that the edge 25 presents a diameter which is smaller than the diameter of the edge 26.

The lip L6 of the device 20 axially extends towards the surface 11 starting directly from the annular portion 15b of the insert 15, and it presents a substantially isosceles triangle shape in transverse section, the peak of which is, however, thickened by the presence of a projection 27 on its external side which is suitable for improving the performance of the lip L6 itself.

An additional' advantage which is derived from the integral construction of the lips L5 and L4 into a single lip L1, as previously described in the introduction, is the fact that both the sealing device 20 and the sealing device 30 present a reduced radial dimension in relation to sealing devices of a well-known type and that they are thus more easily adaptable to different kinds of rolling contact bearings.

## Claims

1. Sealing device (20) for a rolling contact bearing hub group which comprises a hub (2) defining a contact surface (11), the sealing device (20) presenting a substantially rigid insert (15) which may be installed on a fixed portion (8) of the rolling contact bearing and at least one first sealing contact lip (L1) which extends from the insert (15) itself towards the contact surface (11) and which comprises a first and a second sealing portion (21) (22) which are arranged in series in relation to each other, and are in sliding contact with the said contact surface (11) in correspondence with respective contact edges (25, 26); the first sealing portion (21) presenting a thickness (S1) which is greater than a thickness (S2) of the second sealing portion (22) and a longitudinal development which is substantially similar to the longitudinal development of the second sealing portion (22); the sealing device being **characterised by** the fact that the first sealing portion (21) and the second sealing portion (22) are both radially limited towards the outside by a single and continuous surface (24) and in that the second sealing portion (22) is much more flexible than the first sealing portion (21); the two sealing portions (21, 22) defining a depression chamber (23) which is arranged between the said two sealing edges (25 26) and which presents an internal pressure value lower than an external pressure value of the chamber itself when in a resting position;.

2. Sealing device according to Claim 1, **characterised by** the fact that the said contact edges (25, 26) are suitable for exerting respective specific pressures of an axially decreasing value towards the outside of the rolling contact bearing.

3. Sealing device according to Claim 1, **characterised by** the fact that the hub (2) may revolve around an A axis of rotation and is provided with a connecting flange (10); the said contact surface (11) is obtained on the flange (10) itself by rotating a generating curve around the said A axis of rotation.

4. Sealing device according to Claim 3, **characterised by** the fact that it comprises an additional sealing lip (L6) which is arranged radially outside the said first sealing lip (L1), and which extends from the said metal insert (15) to face the said contact surface (11); the additional sealing lip (L6) presenting, in transverse section, a substantially triangular shape, and being provided with a thickening projection (27) in correspondence with one of its own free ends.

5. Sealing device according to Claim 4, **characterised by** the fact of comprising a third and a fourth sealing lip (L2, L3) which extend axially towards the inside of the rolling contact bearing starting from the said rigid insert (15).

## Patentansprüche

1. Dichtungsvorrichtung (20) für ein Wälzlager-Naben-Bauteil, das eine Nabe (2) umfasst, welche eine Anlagefläche (11) definiert, die Dichtungsvorrichtung (20), die einen im Wesentlichen starren Einschub (15) darstellt, der an einem festen Bereich (8) des Wälzlagers angebracht werden kann, und wenigstens eine erste Dichtlippe (L1), die sich von dem Einschub (15) selbst zu der Anlagefläche (11) erstreckt und die einen ersten und einen zweiten Dichtungsbereich umfasst (21, 22), die hintereinander angeordnet sind und entsprechend ihren jeweiligen Kontaktkanten (25, 26) in Schleifkontakt mit der Anlagefläche (11) sind; der erste Dichtungsbereich (21) von einer Stärke (S1), die größer ist als eine Stärke (S2) des zweiten Dichtungsbereichs (22) und einer Längsausdehnung, die im Wesentlichen der Längsausdehnung des zweiten Dichtungsbereichs (22) gleicht; die Dichtungsvorrichtung **dadurch gekennzeichnet, dass** der erste Dichtungsbereich (21) und der zweite Dichtungsbereich (22) beide durch eine einzige und durchgängige Oberfläche (24) zur Außenseite radial begrenzt sind und dass der zweite Dichtungsbereich (22) viel elastischer ist als der erste Dichtungsbereich (21); wobei die beiden Dichtungsbereiche (21, 22) eine Unterdruckkammer (23) definieren, die zwischen den Dichtungskanten (25, 26) angeordnet ist und die einen Innendruck aufweist, der niedriger ist als der äußere Druck der Kammer in Ruhestellung.

2. Dichtungsvorrichtung nach Anspruch 1, **dadurch gekennzeichnet, dass** die Kontaktkanten (25, 26) dazu angelegt sind, auf die Außenseite des Wälzlagers jeweils spezifischen, axial nach außen abnehmenden Druck auszuüben.

3. Dichtungsvorrichtung nach Anspruch 1, **dadurch gekennzeichnet, dass** die Nabe (2) um eine Drehachse A rotieren kann und mit einem Verbindungsflansch (10) versehen ist; wobei die Anlagefläche (11) an dem Flansch (10) durch Drehung einer entsprechenden Kurve um die Drehachse A berechnet wird.

4. Dichtungsvorrichtung nach Anspruch 3, **dadurch gekennzeichnet, dass** sie eine zusätzliche Dichtlippe (L6) umfasst, die radial außerhalb der ersten Dichtlippe (L1) angeordnet ist, und sich von der Metalleinlage (15) in Richtung der Anlagefläche (11) erstreckt; wobei die zusätzliche Dichtlippe (L6) im Querschnitt von im Wesentlichen dreieckiger Form ist und mit einer sich verdickenden Auskragung (27) analog zu einem ihrer eigenen freien Enden versehen ist.

5. Dichtungsvorrichtung nach Anspruch 4, **dadurch gekennzeichnet, dass** sie eine dritte und eine vierte Dichtlippe (L2, L3) umfasst, die sich ausgehend von der starren Einlage (15) axial zur Innenseite des Wälzlagers erstrecken.

## Revendications

1. Dispositif d'étanchéité (20) pour un groupe de moyeu de palier à contact de roulement qui comprend un moyeu (2) définissant une surface de contact (11), le dispositif d'étanchéité (20) présentant une pièce rapportée sensiblement rigide (15) qui peut être installée sur une partie fixe (8) du palier à contact de roulement et au moins une première lèvre de contact d'étanchéité (L1) qui s'étend à partir de la pièce rapportée (15) elle-même vers la surface de contact (11) et qui comprend une première et une seconde partie d'étanchéité (21) (22) qui sont agencées en série l'une par rapport à l'autre, et sont en contact coulissant avec ladite surface de contact (11) en correspondance avec des bords de contact respectifs (25, 26) ; la première partie d'étanchéité (21) présentant une épaisseur (S1) qui est supérieure à une épaisseur (S2) de la seconde partie d'étanchéité (22) et un développement longitudinal qui est sensiblement similaire au développement longitudinal de la seconde partie d'étanchéité (22) ; le dispositif d'étanchéité étant **caractérisé en ce que** la première partie d'étanchéité (21) et la seconde partie d'étanchéité (22) sont toutes les deux limitées de façon radiale vers l'extérieur par une surface unique et continue (24) et **en ce que** la seconde partie d'étanchéité (22) est bien plus flexible que la première partie d'étanchéité (21) ; les deux parties d'étanchéité (21, 22) définissant une chambre de dépression (23) qui est agencée entre lesdits deux bords d'étanchéité (25, 26) et qui présente une valeur de pression interne inférieure à une valeur de pression externe de la chambre elle-même une fois dans une position de repos.

2. Dispositif d'étanchéité selon la revendication 1, **caractérisé en ce que** lesdits bords de contact (25, 26) sont appropriés pour exercer des pressions spécifiques respectives d'une valeur diminuant de façon axiale vers l'extérieur du palier à contact de roulement.

3. Dispositif d'étanchéité selon la revendication 1, **caractérisé en ce que** le moyeu (2) peut tourner autour d'un axe A de rotation et est pourvu d'un flasque de liaison (10) ; ladite surface de contact (11) est obtenue sur le flasque (10) lui-même en faisant tourner une courbe de génération autour dudit axe A de rotation.

4. Dispositif d'étanchéité selon la revendication 3, **caractérisé en ce qu'**il comprend une lèvre d'étanchéité supplémentaire (L6) qui est agencée de façon radiale à l'extérieur de ladite première lèvre d'étanchéité (L1), et qui s'étend à partir de ladite pièce rapportée métallique (15) pour faire face à ladite surface de contact (11) ; la lèvre d'étanchéité supplémentaire (L6) présentant, dans sa section transversale, une forme sensiblement triangulaire, et étant pourvue de une saillie épaississante (27) en correspondance avec une de ses propres extrémités libres.

5. Dispositif d'étanchéité selon la revendication 4, **caractérisé en ce qu'**il comprend une troisième et une quatrième lèvre d'étanchéité (L2, L3) qui s'étendent de façon axiale vers l'intérieur du palier à contact de roulement commençant à partir de ladite pièce rapportée rigide (15).
